(19) Europäisches Patentamt

European Patent Office

Office européen des brevets

(11) EP 1 555 545 A1

(12) EUROPEAN PATENT APPLICATION

(43) Date of publication:
20.07.2005 Bulletin 2005/29

(51) Int Cl.⁷: G01S 17/87

(21) Application number: 05250264.8

(22) Date of filing: 19.01.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(30) Priority: 19.01.2004 IL 15994504

(71) Applicant: Rafael Armament Development
Authority Ltd.
Haifa 31021 (IL)

(72) Inventors:
• Imber, Amir,
  P.O. Box 2250, Haifa 31021 (IL)
• Goshtchevsky, Chris
  P.O. Box 2250, Haifa 2250 (IL)

(74) Representative: Fenlon, Christine Lesley
Haseltine Lake,
Imperial House,
15-19 Kingsway
London WC2B 6UD (GB)

(54) **Multi-beam laser rangefinder**

(57) A multi-beam rangefinder system for estimating a range-derived value of an airborne platform relative to the ground. A planar model approximates the ground. The system includes a transmitter arrangement to produce a number of pulses of electromagnetic radiation directed in three or more non-coplanar directions and a sensor arrangement for sensing the pulses of electromagnetic radiation reflected from the ground. The systems also includes a processor arrangement for processing independent measurement of time of flight of the pulses in each of the three or more non-coplanar directions, in order to estimate the range derived value of the airborne platform relative to the ground.

Fig. 5

EP 1 555 545 A1

**Description**

FIELD AND BACKGROUND OF THE INVENTION

The present invention relates to a laser rangefinder and, in particular, it concerns a multi-beam laser rangefinder.

By way of introduction, pressure and radar driven measurement systems used for airborne platform guidance are generally inaccurate, especially at low altitudes where higher precision is needed.

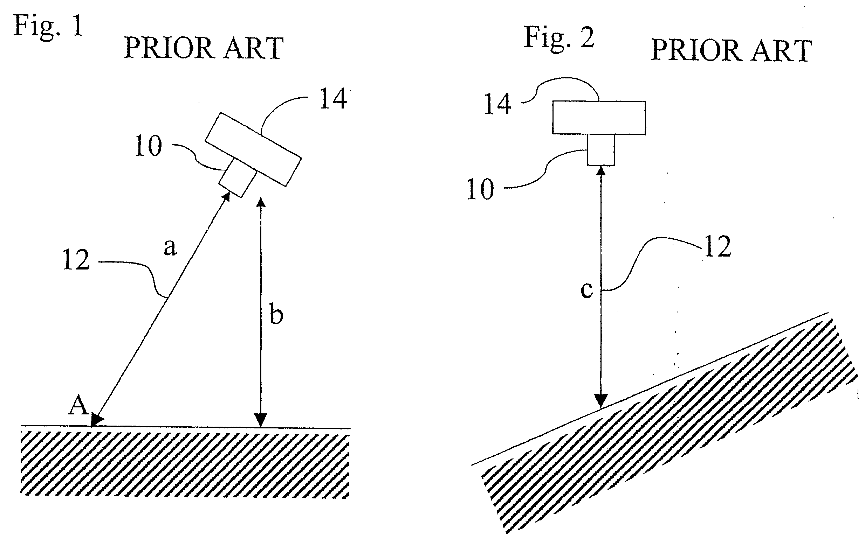

Laser rangefinders are used to measure distances to near and distant objects by measuring the time taken for laser pulses to travel to and from a target. The direction of the laser beam greatly affects the measurement taken, as will now be explained. Reference is now made to Fig. 1, which is a schematic view of a single-beam rangefinder **10** that is constructed and operable in accordance with the prior art. Single-beam rangefinder **10** is disposed on an airborne platform **14**. Due to the orientation of airborne platform **14,** the line of sight **12** of single-beam rangefinder **10** is directed to point *A* on the surface of the ground below. Therefore, single-beam rangefinder **10** measures a distance a from single-beam rangefmder **10** to the ground. However, the height of single-beam rangefinder **10** above the ground is equal to *b.* Therefore, the altitude of airborne platform **14** is incorrectly measured. At low altitudes, for example, less than 500 meters altitude for auto pilot landing of a small aircraft or less than 50 meters altitude for operating an emergency system in case of an impending crash, the accuracy of altitude calculation is very important.

Reference is now made to Fig. 2, which is a schematic view of single-beam rangefinder **10** of Fig. 1 performing a measurement above sloped ground. In this scenario, line of sight **12** of single-beam rangefinder **10** is directed vertically downward. Nevertheless, the ground below airborne platform **14** is sloped. Therefore, the altitude calculation measured by single-beam rangefinder **10** gives a false measurement of the position of airborne platform **14** relative to the ground below. In addition, the altitude calculation cannot be used to calculate roll or pitch of airborne platform **14** relative to the ground nor the time-to-hit the ground by airborne platform **14** for automatic landing purposes.

There is therefore a need for an accurate altitude measurement and/or an accurate navigation system for use with an airborne platform.

SUMMARY OF THE INVENTION

The present invention is a multi-beam rangefinder system and method of operation thereof.

According to the teachings of the present invention there is provided, a multi-beam rangefinder system for estimating a range-derived value of an airborne platform relative to the ground, the ground being approximated by a planar model, the system comprising: (a) a transmitter arrangement configured for producing a plurality of pulses of electromagnetic radiation directed in at least three non-coplanar directions; (b) a sensor arrangement for sensing the pulses of electromagnetic radiation reflected from the ground; and (c) a processor arrangement configured for processing of independent measurements of time of flight of the pulses in each of the three non-coplanar directions in order to estimate the range derived value of the airborne platform relative to the ground.

According to a further feature of the present invention, the transmitter arrangement is configured such that the pulses are produced as non-overlapping pulses.

According to a further feature of the present invention, the transmitter arrangement is configured for producing the pulses sequentially in the three non-coplanar directions.

According to a further feature of the present invention, the processor is configured for processing of independent measurements of time of flight of the pulses in each of the three non-coplanar directions in order to estimate an altitude of the airborne platform relative to the ground.

According to a further feature of the present invention, the processor is configured for processing of independent measurements of time of flight of the pulses in each of the three non-coplanar directions in order to estimate a rate of a descent or ascent of the airborne platform relative to the ground.

According to a further feature of the present invention, the processor is configured for processing of independent measurements of time of flight of the pulses in each of the three non-coplanar directions in order to estimate a rate of an acceleration of the airborne platform relative to the ground.

According to a further feature of the present invention, the processor is configured for processing of independent measurements of time of flight of the pulses in each of the three non-coplanar directions in order to estimate a time to hit the ground by the airborne platform.

According to a further feature of the present invention, the processor is configured for processing of independent measurements of time of flight of the pulses in each of the three non-coplanar directions in order to estimate a roll of the airborne platform relative to the ground.

According to a further feature of the present invention, the processor is configured for processing of independent measurements of time of flight of the pulses in each of the three non-coplanar directions in order to estimate a pitch of the airborne platform relative to the ground.

According to a further feature of the present invention, the processor is configured for processing of' independent measurements of time of flight of the pulses in each of the three non-coplanar directions in order to estimate an angular velocity of the airborne platform relative to the ground.

According to a further feature of the present invention, the processor is configured for processing of independent measurements of time of flight of the pulses in each of the three non-coplanar directions in order to estimate an angular acceleration of the airborne platform relative to the ground.

According to a further feature of the present invention, the sensor arrangement includes a single detector, the sensor arrangement having a field of view which is wide enough, such that the single detector detects the pulses of all of the at least three non-coplanar directions.

According to a further feature of the present invention, there is also provided an emergency system configured for being actuated in response to the range derived value exceeding a predefined value.

According to a further feature of the present invention, the predefined value is a rate of a descent or ascent of the airborne platform relative to the ground.

According to a further feature of the present invention, the predefined value is a time to hit the ground by the airborne platform.

According to the teachings of the present invention there is also provided a method for estimating a range-derived value ofan airborne platform relative to the ground, the ground being approximated by a planar model, the method comprising the steps of: (a) producing a plurality of pulses of electromagnetic radiation directed in three non-coplanar directions; (b) receiving the pulses of electromagnetic radiation reflected from the ground; and (c) processing independent measurements of time of flight of the pulses in each of the three non-coplanar directions in order to estimate the range derived value of the airborne platform relative to the ground.

According to a further feature of the present invention, the range defined value is a rate of a descent or ascent of the airborne platform relative to the ground.

According to a further feature of the present invention, the range defined value is a time to hit the ground by the airborne platform.

According to a further feature of the present invention, the range defined value is a roll of the airborne platform relative to the ground.

According to a further feature of the present invention, the range defined value is a pitch of the airborne platform relative to the ground.

According to a further feature of the present invention, the range defined value is an angular velocity of the airborne platform relative to the ground.

According to a further feature of the present invention, the range defined value is an angular acceleration of the airborne platform relative to the ground.

According to a further feature of the present invention, the range defined value is a rate of a descent or ascent of the airborne platform relative to the ground.

According to a further feature of the present invention, the range defined value is an acceleration of the airborne platform relative to the ground.

According to a further feature of the present invention, the step of producing is performed by producing the pulses as non-overlapping pulses directed in three non-coplanar directions.

According to a further feature of the present invention, the step of producing is performed by producing the pulses sequentially in the three non-coplanar directions.

According to a further feature of the present invention, there is also provided the step of actuating an emergency system in response to the range derived value exceeding a predefined value.

According to a further feature of the present invention, the predefined value is a rate of a descent or ascent of the airborne platform relative to the ground.

According to a further feature of the present invention, the predefined value is a time to hit the ground by the airborne platform.

BRIEF DESCRIPTION OF THE DRAWINGS

The invention is herein described, by way of example only, with reference to the accompanying drawings, wherein:

Fig. 1 is a schematic view of a single-beam rangefinder that is constructed and operable in accordance with the prior art;
Fig. 2 is a schematic view of the single beam rangefinder of Fig. 1 performing a measurement above sloped ground;
Fig. 3 is a schematic view of a multi-beam laser rangefinder system performing measurements that is constructed and operable in accordance with a preferred embodiment of the invention;

Fig. 4 is a schematic block view of the multi-beam laser rangefinder system of Fig. 3;

Fig. 5 is a schematic isometric view of the rangefinder system of Fig. 4 performing measurements; and

Fig. 6 is a vector diagram constructed using measurements performed by the rangefmder system of Fig. 3.

DESCRIPTION OF THE PREFERRED EMBODIMENTS

The present invention is a multi-beam rangefinder system and method of operation thereof.

The principles and operation of a multi-beam rangefinder system according to the present invention may be better understood with reference to the drawings and the accompanying description.

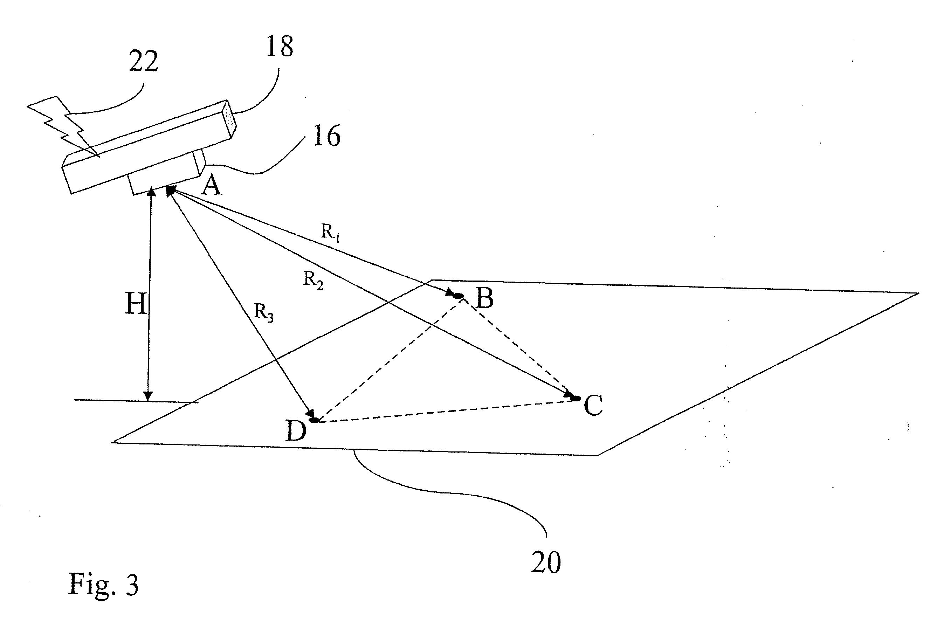

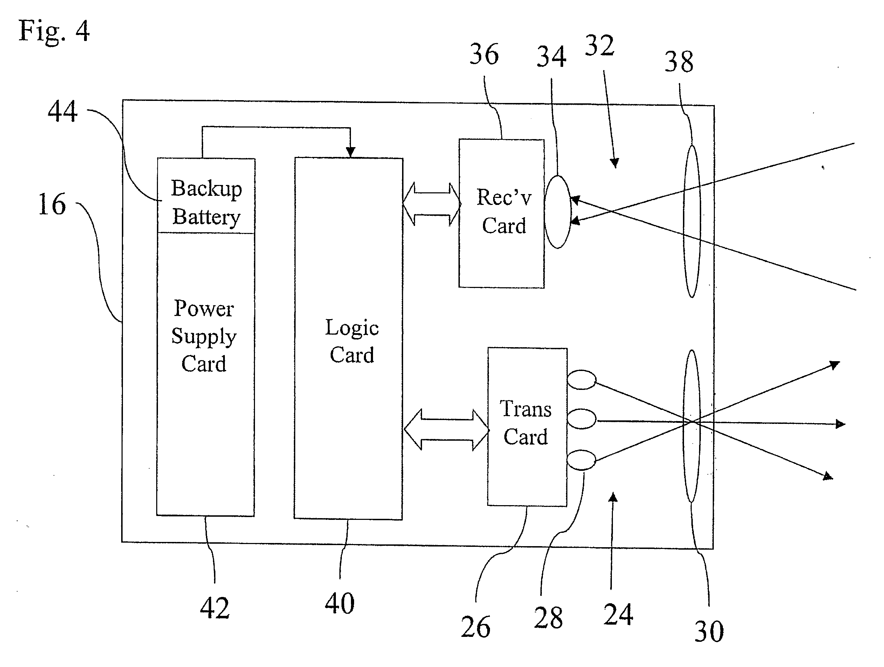

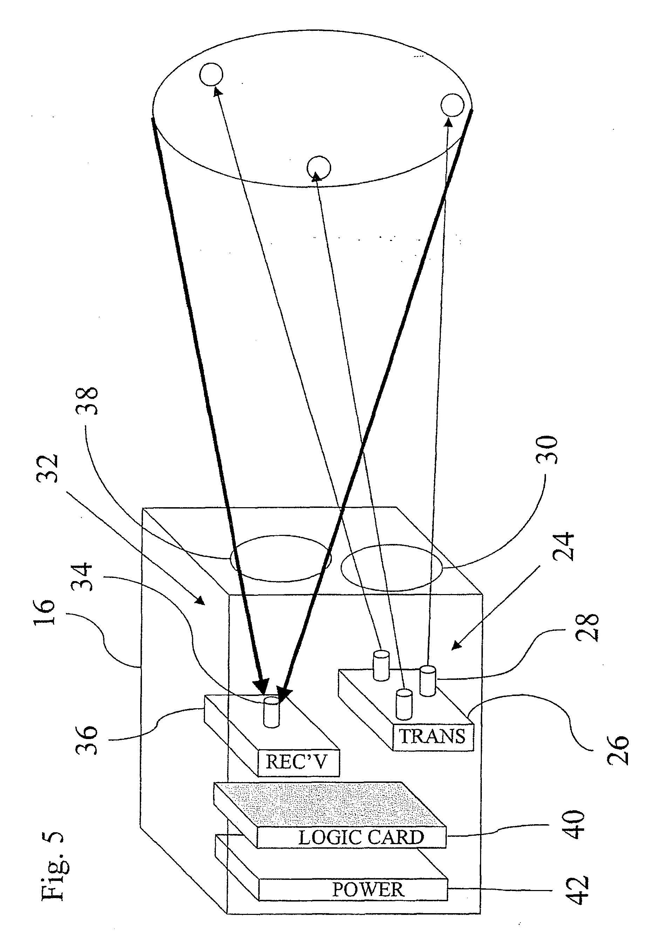

Reference is now made to Fig. 3, which is a schematic view of a multi-beam laser rangefinder system **16** performing measurements that is constructed and operable in accordance with a preferred embodiment of the invention. Multi-beam laser rangefinder system **16** is configured for estimating a range-derived value of an airborne platform **18** relative to the ground **20**. Multi-beam laser rangefinder system **16** performs time of flight calculations on directed laser pulses. These time of flights are typically, but not always, used to calculate the distance from the source of the laser pulses to the target of the laser pulses. Therefore, a range-derived value is defined herein as, any value that is determinable from the time of flight of the laser pulses and/or distance measurements performed by multi-beam laser rangefinder system **16.** Multi-beam laser rangefinder system **16** estimates range-derived values by the following method. First, multi-beam laser rangefinder system **16** produces a plurality of pulses of electromagnetic radiation directed in three non-coplanar directions. The pulses are produced as non-overlapping pulses directed in the three non-coplanar directions as the pulses are detected by a single sensor, as will be described below with reference to Figs. 4 and 5. The term "produced as non-overlapping pulses" is defined herein as the pulses are produced one at a time and no two pulses are being produced by multi-beam laser rangefinder system **16** at the same time. Typically, multi-beam laser rangefinder system **16** is configured such that, a new pulse is not produced until an existing pulse has had time to reflect from the ground and be received by multi-beam laser rangefinder system **16**. Multi-beam laser rangefinder system **16** is generally configured such that the pulses are produced sequentially in the three non-coplanar directions. For example, one pulse is directed in a first direction, then a second pulse is directed in a second direction and a third pulse is then directed in a third direction. It will be appreciated by those ordinarily skilled in the art that other sequential patterns can be established. The pulses arrive at points *B, C,* and *D* on the ground. Points *B, C* and *D* define a plane *BCD.* Therefore, the ground is approximated by a planar model passing through points *B, C* and *D.* It will be appreciated by those ordinarily skilled in the art that the number of directions in which the pulses are directed can be increased. One of the advantages in increasing the number of directions is explained later. If more than three directions are used, only three of the directions need to be non-coplanar. For example, if four directions are used, three of the directions can define a plane. The term "in three non-coplanar directions" is defined herein to include more than three directions as long as a minimum of three of the directions chosen are non-coplanar. The pulses are reflected by the ground and received by multi-beam laser rangefinder system 16. Multi-beam laser rangefinder system **16** then processes independent measurements of time of flight of the pulses in each of the three non-coplanar directions in order to estimate range derived values of the airborne platform relative to the ground. The position of multi-beam laser rangefinder system **16** in relation to airborne platform **18** is known. Additionally, the orientation of the non-coplanar directions of the pulses relative to multi-beam laser rangefinder system **16** is known. Therefore, many range-derived values are estimated using the measurements performed by multi-beam laser rangefinder system **16**, as will now be explained. It will be appreciated by those ordinarily skilled in the art that as the position of multi-beam laser rangefinder system **16** in relation to airborne platform **18** is known, the range-derived value can be estimated for any point of airborne platform **18**. Therefore, the term "range-derived value of an airborne platform relative to the ground" is defined herein as, a range derived value of any point of airborne platform relative to the ground. Additionally, the orientation and position of any point of airborne platform **18** relative to any point on the planar model of the ground is known.

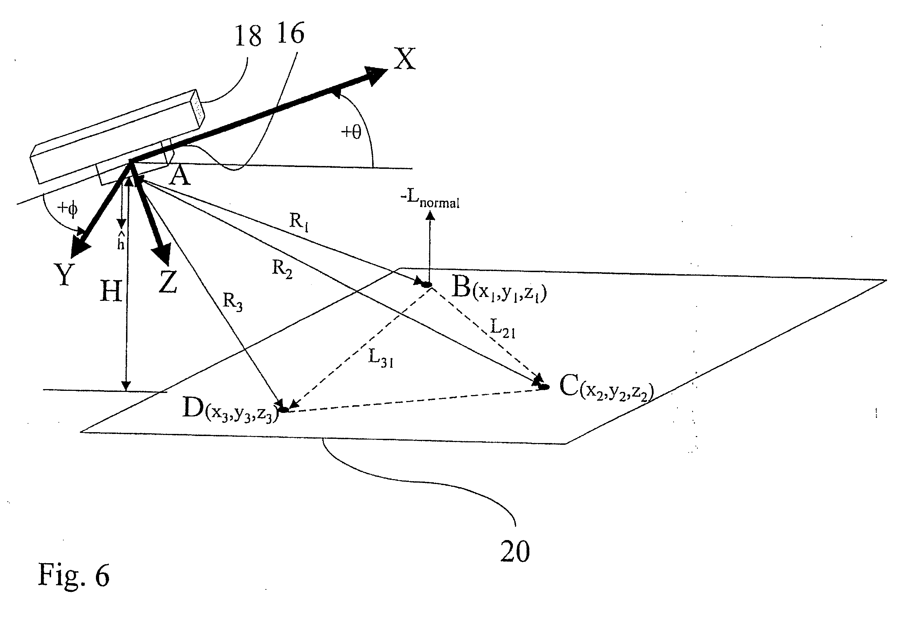

Multi-beam laser rangefinder system **16** processes the time of flight of the pulses in order to derive the distances from point *A* to points *B, C* and *D,* namely, $R_1$, $R_2$ and $R_3$ respectively. As the angles between lines *AB*, *AC* and *AD* are known, the length of a line perpendicular to plane *BCD* from plane *BCD* to multi-beam laser rangefinder system **16** is calculated using geometry or vector analysis, giving the altitude, *H*, of airborne platform **18**. Vector analysis of the measurements performed by multi-beam laser rangefinder system **16** is described in more detail with reference to Fig. 6.

The time derivative of *H* is calculated to give a rate of descent or ascent of airborne platform **18** relative to the ground. The time derivative of *H* is calculated using changing values of *H* over time. The time to hit the ground by airborne platform **18** is calculated, in the case of zero acceleration, by dividing *H* by the rate of a descent. For the case of non-zero acceleration, the time to hit the ground by airborne platform **18,** is calculated by solving a quadratic equation, for example, equation 19 below. The roll and pitch of airborne platform **18** relative to the ground are calculated by performing calculations using $R_1$, $R_2$ and $R_3$. Similarly, the angular velocity and angular acceleration of airborne platform **18** relative to the ground are calculated from time derivatives of the roll and pitch or by performing calculations on the time derivatives of $R_1$, $R_2$ and $R_3$. It will be appreciated by those ordinarily skilled in the art that the above range-derived values can be derived using other analytical and/or mathematical techniques. It will be appreciated by those ordinarily skilled in the art that many other spatial and/or temporal values can be calculated from the measurements performed by multi-beam laser rangefinder system **16**. As described above, the number of non-coplanar directions that the pulses are directed in can be increased in order to increase the accuracy of the calculated range-derived values. Three non-coplanar directions is the minimum number required to calculate the range-derived values. If more than three non-coplanar directions are used, the error of the computations is decreased by averaging the results of successive computations derived for each group of three non-coplanar directions.

The estimated range-derived values are used to give a pilot accurate information about the position, orientation and motion of airborne platform **18**. The estimated range derived values are also used for autopilot or autolanding of airborne platform **18**. Additionally, the estimated range derived values, especially rate of a descent of airborne platform **18** and time-to-hit the ground are used to actuate an emergency system **22** when one or a combination of certain range derived values exceed predefined values. The term "exceed" is herein defined as, going beyond a predefined value either from above or below the predefined value. For example, when the time-to-hit falls below a predefined value, emergency system **22** is actuated and when the rate of descent climbs above a predefined value, emergency system **22** is actuated.

Reference is now made to Figs. 4 and 5. Fig. 4 is a schematic block view of multi-beam laser rangefinder system **16** of Fig. 3. Fig. 5 is a schematic isometric view of multi-beam laser rangefinder system **16** of Fig. 4 performing measurements. Multi-beam laser rangefinder system **16** includes a transmitter arrangement **24** configured for producing a plurality of pulses of electromagnetic radiation directed in at least three non-coplanar directions. Transmitter arrangement **24** has a transmitter card **26**, three laser diodes **28** and an optical arrangement **30**. It will be appreciated by those ordinarily skilled in the art that other laser sources can be used instead of laser diodes **28**. It will be appreciated by those ordinarily skilled in the art that transmitter arrangement **24** can have more than three laser diodes to increase the number of directions that pulses are directed to, as described above with reference to Fig. 3. Transmitter card **26** manages the operation of laser diodes **28** including the timing of firing of the diodes and the duration of the pulses. For laser diodes employed in ranging applications, the pulse repetition rate is typically in the range of 100 to 10,000 pulses per second and the pulse width is typically in the range of 10 to 50 nanoseconds. Transmitter card **26** is also configured such that, the pulses are non-overlapping pulses as described above with reference to Fig. 3. Transmitter card **26** is also configured for producing the pulses sequentially in the three non-coplanar directions, as described above with reference to Fig. 3. Laser diodes **28** are oriented such that, each laser diode **28** produces a pulse in one of the three non-coplanar directions. Optical arrangement **30** typically includes one or more lenses for focusing the light produced by the laser diodes **28**. Multi-beam laser rangefinder system **16** also includes a sensor arrangement **32** for sensing the pulses of electromagnetic radiation reflected from the ground. Sensor arrangement **32** has a single detector **34** for detecting light pulses received from all three non-coplanar directions. Sensor arrangement **32** also includes a receiver card **36** and an optical arrangement **38.** Optical arrangement **38** includes one or more lenses. Incoming laser pulses pass through optical arrangement **38** and arrive at detector **34**. Detector **34** and optical arrangement **38** in combination, have a field of view which is wide enough, such that detector **34** detects the pulses of all three non-coplanar directions (best seen in Fig. 5). Multi-beam laser rangefinder system **16** also includes a processor arrangement **40.** Processor arrangement **40** is configured for calculating the time of flight of the pulses. Processor arrangement **40** manages the timing of the pulses. The timing is reset each time a pulse is produced to insure unambiguous measurement of elapsed time between laser emission and detection. Processor arrangement **40** is also configured for processing the independent measurements of time of flight of the pulses in each of the three non-coplanar directions in order to estimate range derived values of airborne platform **18** relative to the ground. As described with reference to Fig. 3, multi-beam laser rangefinder system **16** is configured to estimate range derived values including, but not limited to, an altitude of airborne platform **18** relative to the ground, a rate of a descent or ascent of airborne platform **18** relative to the ground, a time to hit the ground by airborne platform **18,** a roll and pitch of airborne platform **18** relative to the ground and an angular velocity and angular acceleration of airborne platform **18** relative to the ground. Multi-beam laser rangefinder system **16** also includes a power supply **42** and a backup battery **44**. It will be appreciated by those ordinarily skilled in the art that components and/or skills used for single-beam laser rangefinders can be used to produce multi-beam laser rangefinder system **16**. Many of the components of multi-beam laser rangefinder system **16** depend on the application and the maximum range required. For example, for a range of up to a few hundred meters, semiconductor lasers and detectors are generally suitable. Semiconductor GaAs lasers are commercially available from Perkin-Elmer, Inc. of 44370 Christy Street, Fremont, CA 94538-3180, USA and Laser Devices, Inc. of 2 Harris Court, Suite A-4, Monterey, California 93940, USA. Semiconductor Si or InGaAs detectors are commercially available from Perkin Elmer, Inc. and Analog Modules, Inc. of 126 Baywood Avenue Longwood, FL 32750-3426, USA. Suitable processors and controllers are commercially available from Analog Devices, Inc. of One Technology Way, P.O. Box 9106, Norwood, MA 02062-9106, USA and Texas Instruments, Inc. of 12500 TI Boulevard, Dallas, TX 75243-4136, USA.

It will be appreciated by those ordinarily skilled in the art that just as multi-beam laser rangefinder system **16** is constructed with a transmitter arrangement **24** including a plurality of narrow-beam lasers **28** with one wide field of view detector **34,** so also a multi-beam laser rangefinder of the present invention can be constructed having a plurality of narrow field-of-view detectors and a single wide divergence laser. In both embodiments, the output is the range along a plurality of non-coplanar directions. The embodiment of multi-beam laser rangefinder system **16** requires less components and is more power efficient and accurate.

Reference is now made to Fig. 6, which is a vector diagram, constructed using measurements performed by multi-beam laser rangefinder system **16** of Fig. 3. Employing a commonly used sign convention, a right-hand coordinate system is attached to airborne platform **18,** such that X direction is the forward axis of' airborne platform **18**, Y direction is perpendicular to X, and Z is perpendicular to X and Y. For i=1 to 3, the directions of the non-coplanar laser beams determined by the securing orientation of' laser diodes **28** relative to airborne platform **18,** with this order:

$\chi_i$ is the rotation angle relative to axis Z.
$\beta_i$ is the rotation angle relative to axis Y.

The unit vectors for each range measurement are defined as follows:

$$\hat{r}_i = \begin{bmatrix} \cos \chi_i \cdot \sin \beta_i \\ \cos \beta_i \cdot \sin \chi_i \\ -\sin \beta_i \end{bmatrix}$$ (Equation 1).

Points $x_i$, $y_i$, $z_i$ are computed from the ranges $R_i$, multiplied by the respective unit vectors, as follows:

$$\overline{R}_i = \begin{bmatrix} x_i \\ y_i \\ z_i \end{bmatrix} = Ri \cdot \hat{r}_i$$ (Equation 2).

Vector $L_{21}$ is computed as follows:

$$\overline{L}_{21} = \overline{R}_2 - \overline{R}_1$$ (Equation 3).

Vector $L_{31}$ is computed as follows:

$$\overline{L}_{31} = \overline{R}_3 - \overline{R}_1$$ (Equation 4).

Employing vector multiplication, vector $L_{normal}$ is computed as follows:

$$\overline{L}_{normal} = \overline{L}_{21} \times \overline{L}_{31}$$ (Equation 5).

For the three projections of vector $L_{normal}$ ($L_{normal/x}$, $L_{normal/y}$, $L_{normal/z}$), the unit vector $\hat{h}$ is computed as follows:

$$\hat{h} = \frac{\overline{L}_{normal}}{\sqrt{L_{normal/x}^2 + L_{normal/y}^2 + L_{normal/z}^2}}$$ (Equation 6)

Employing scalar multiplication, the perpendicular height H above ground **20** is computed from one of' equations 7, 8 or 9 (improved accuracy may be achieved by averaging the alternate results):

$$H = \hat{h} \cdot \bar{R}_1 \qquad \text{(Equation 7)}$$

or

$$H = \hat{h} \cdot \bar{R}_2 \qquad \text{(Equation 8)}$$

or

$$H = \hat{h} \cdot \bar{R}_3 \qquad \text{(Equation 9)}.$$

For the three projections of the unit vector $\hat{h}$ ($h_x$, hy, $h_z$), the pitch angle $\theta$ of airborne platform **18** is computed as follows (atan is the inverse of the trigonometric function tangent, sometimes denoted as tan$^{-1}$ or tg$^{-1}$):

$$\theta_{pitch} = a\tan\left[\frac{-h_x}{\sqrt{h_y^2 + h_z^2}}\right] \qquad \text{(Equation 10)}.$$

The roll angle $\phi$ of airborne platform **18** is computed as follows:

$$\phi_{roll} = a\tan\left[\frac{h_y}{h_z}\right] \qquad \text{(Equation 11)}.$$

The angular velocity of the pitch angle and roll angle, respectively, is computed as follows:

$$\omega_{pitch} = \frac{d(\theta_{pitch})}{dt} \qquad \text{(Equation 12)}$$

$$\omega_{roll} = \frac{d(\phi_{roll})}{dt} \qquad \text{(Equation 13)}.$$

The angular acceleration of the pitch angle and roll angle, respectively, is computed as follows:

$$\alpha_{pitch} = \frac{d(\omega_{pitch})}{dt} \qquad \text{(Equation 14)}$$

$$\alpha_{roll} = \frac{d(\omega_{roll})}{dt} \qquad \text{(Equation 15)}.$$

The rate of descent or ascent is computed as follows:

$$rate_{descent} = \frac{d(H)}{dt} \qquad \text{(Equation 16).}$$

The acceleration of the platform relative to the ground is computed as follows:

$$accel = \frac{d(rate_{descent})}{dt} \qquad \text{(Equation 17).}$$

The time to hit the ground in the case of zero acceleration is computed as follows:

$$Time = \frac{H}{rate_{descent}} \qquad \text{(Equation 18).}$$

The time to hit the ground in the case of nonzero acceleration is computed as follows:

$$Time = \frac{-rate_{descent} + \sqrt{rate_{descent}^2 + 2 \cdot accel \cdot H}}{accel} \qquad \text{(Equation 19).}$$

Filtering techniques may be applied to the measurements to improve the accuracy of the computed values.
It will be appreciated by persons skilled in the art that the present invention is not limited to what has been particularly shown and described hereinabove. Rather, the scope of the present invention includes both combinations and sub-combinations of the various features described hereinabove, as well as variations and modifications thereof that are not in the prior art which would occur to persons skilled in the art upon reading the foregoing description.

## Claims

1. A multi-beam rangefinder system for estimating a range-derived value of an airborne platform relative to the ground, the ground being approximated by a planar model, the system comprising:

   (a) a transmitter arrangement configured for producing a plurality of pulses of electromagnetic radiation directed in at least three non-coplanar directions;
   (b) a sensor arrangement for sensing said pulses of electromagnetic radiation reflected from the ground; and
   (c) a processor arrangement configured for processing of independent measurements of time of flight of said pulses in each of said three non-coplanar directions in order to estimate the range derived value of the airborne platform relative to the ground.

2. The system of claim 1, wherein said transmitter arrangement is configured such that said pulses are produced as non-overlapping pulses.

3. The system of claim 2, wherein said transmitter arrangement is configured for producing said pulses sequentially in said three non-coplanar directions.

4. The system of' claim 1 wherein said processor is configured for processing of independent measurements of time of flight of said pulses in each of said three non-coplanar directions in order to estimate an altitude of the airborne platform relative to the ground.

5. The system of claim 1 wherein said processor is configured for processing of independent measurements of time of flight of said pulses in each of said three non-coplanar directions in order to estimate a rate of a descent or ascent of the airborne platform relative to the ground.

6. The system of claim 1 wherein said processor is configured for processing of independent measurements of time of flight of said pulses in each of said three non-coplanar directions in order to estimate a rate of an acceleration of the airborne platform relative to the ground.

**7.** The system of claim 1 wherein said processor is configured for processing of independent measurements of time of flight of said pulses in each of said three non-coplanar directions in order to estimate a time to hit the ground by the airborne platform.

**8.** The system of claim 1 wherein said processor is configured for processing of independent measurements of time of flight of said pulses in each of said three non-coplanar directions in order to estimate a roll of the airborne platform relative to the ground.

**9.** The system of claim 1 wherein said processor is configured for processing of independent measurements of time of flight of said pulses in each of said three non-coplanar directions in order to estimate a pitch of the airborne platform relative to the ground.

**10.** The system of claim I wherein said processor is configured for processing of independent measurements of time of flight of said pulses in each of said three non-coplanar directions in order to estimate an angular velocity of the airborne platform relative to the ground.

**11.** The system of claim 1 wherein said processor is configured for processing of independent measurements of time of flight of said pulses in each of said three non-coplanar directions in order to estimate an angular acceleration of the airborne platform relative to the ground.

**12.** The system of claim 1, wherein said sensor arrangement includes a single detector, said sensor arrangement having a field of view which is wide enough, such that said single detector detects said pulses of all of said at least three non-coplanar directions.

**13.** The system of claim 1, further comprising an emergency system configured for being actuated in response to the range derived value exceeding a predefined value.

**14.** The system of claim 13, wherein said predefined value is a rate of a descent or ascent of the airborne platform relative to the ground.

**15.** The system of claim 13, wherein said predefined value is a time to hit the ground by the airborne platform.

**16.** A method for estimating a range-derived value of an airborne platform relative to the ground, the ground being approximated by a planar model, the method comprising the steps of:

(a) producing a plurality of pulses of electromagnetic radiation directed in three non-coplanar directions;
(b) receiving said pulses of electromagnetic radiation reflected from the ground; and
(c) processing independent measurements of time of flight of said pulses in each of said three non-coplanar directions in order to estimate the range derived value of the airborne platform relative to the ground.

**17.** The method of claim 16, wherein said range defined value is a rate of a descent or ascent of the airborne platform relative to the ground.

**18.** The method of claim 16, wherein said range defined value is a time to hit the ground by the airborne platform.

**19.** The method of claim 16, wherein said range defined value is a roll of the airborne platform relative to the ground.

**20.** The method of claim 16, wherein said range defined value is a pitch of the airborne platform relative to the ground.

**21.** The method of claim 16, wherein said range defined value is an angular velocity of the airborne platform relative to the ground.

**22.** The method of claim 16, wherein said range defined value is an angular acceleration of the airborne platform relative to the ground.

**23.** The method of claim 16, wherein said range defined value is a rate of a descent or ascent of the airborne platform relative to the ground.

**24.** The method of claim 16, wherein said range defined value is an acceleration of the airborne platform relative to the ground.

**25.** The method of claim 16, wherein said step of producing is performed by producing said pulses as non-overlapping pulses directed in three non-coplanar directions.

**26.** The method of claim 25, wherein said step of producing is performed by producing said pulses sequentially in said three non-coplanar directions.

**27.** The method of claim 16, further comprising the step of actuating an emergency system in response to the range derived value exceeding a predefined value.

**28.** The method of claim 27, wherein said predefined value is a rate of a descent or ascent of the airborne platform relative to the ground.

**29.** The method of claim 27, wherein said predefined value is a time to hit the ground by the airborne platform.

Fig. 1    PRIOR ART

14

10

12    a

b

A

Fig. 2    PRIOR ART

14

10

12

c

EP 1 555 545 A1

Fig. 3

Fig. 4

EP 1 555 545 A1

Fig. 5

Fig. 6

EP 1 555 545 A1

**European Patent Office**

## EUROPEAN SEARCH REPORT

Application Number

EP 05 25 0264

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 98/57192 A (HONEYWELL INC) 17 December 1998 (1998-12-17) | 1,16 | G01S17/87 |
| A | * abstract * <br><br> * page 2, line 20 - page 6, line 5; figures 1-5 * | 2,4,5, 17,23,25 | |
| | ----- | | |
| X | US 4 023 171 A (STAVIS ET AL) 10 May 1977 (1977-05-10) * abstract * | 1,16 | |
| A | * column 2, line 66 - column 5, line 66; figures 1-3 * | 2,4,5, 10,17, 21,23,25 | |
| | ----- | | |
| A | US 2003/030582 A1 (VICKERS ROGER S) 13 February 2003 (2003-02-13) * abstract * * column 8, paragraph 69 - column 58, paragraph 331; figures 1-18 * | 1,16 | |
| | ----- | | TECHNICAL FIELDS SEARCHED (Int.Cl.7) |
| A | US 6 064 330 A (ELLIOTT ET AL) 16 May 2000 (2000-05-16) * abstract * * column 2, line 58 - column 5, line 37; figures 1-6 * | 1,16 | G01S |
| | ----- | | |

The present search report has been drawn up for all claims

| Place of search | Date of completion of the search | Examiner |
|---|---|---|
| The Hague | 12 April 2005 | Blondel, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 25 0264

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2005

| Patent document cited in search report | | Publication date | Patent family member(s) | | Publication date |
|---|---|---|---|---|---|
| WO 9857192 | A | 17-12-1998 | WO | 9857192 A1 | 17-12-1998 |
| | | | CA | 2284744 A1 | 17-12-1998 |
| | | | DE | 69708332 D1 | 20-12-2001 |
| | | | DE | 69708332 T2 | 25-07-2002 |
| | | | EP | 0988560 A1 | 29-03-2000 |
| | | | JP | 2002504228 T | 05-02-2002 |
| US 4023171 | A | 10-05-1977 | NONE | | |
| US 2003030582 | A1 | 13-02-2003 | WO | 03014673 A2 | 20-02-2003 |
| US 6064330 | A | 16-05-2000 | US | 5781147 A | 14-07-1998 |
| | | | AU | 7572098 A | 27-11-1998 |
| | | | WO | 9850800 A1 | 12-11-1998 |

EPO FORM P0459

For more details about this annex : see Official Journal of the European Patent Office, No. 12/82